# EUROPÄISCHE PATENTANMELDUNG

(11) **EP 4 165 990 A1**
(43) Veröffentlichungstag der Anmeldung: **19.04.2023**
(21) Anmeldenummer: 22200764.3
(22) Anmeldetag: 11.10.2022
(51) Int. Cl.: A01N 43/80, A01N 59/16, A01N 25/04, A01N 25/08, A01N 25/10, A01P 1/00, C09D 5/14

(54) **LAGERSTABILE BESCHICHTUNGSZUSAMMENSETZUNG**

(30) Priorität: 18.10.2021 DE 102021005176
(71) Anmelder: STO SE & Co. KGaA, 79780 Stühlingen (DE)
(72) Erfinder: Vogler, Rolf, 79787 Lauchringen (DE); Troll, Michael, 79848 Bonndorf-Dillendorf (DE); Duttlinger, Werner, 79848 Bonndorf (DE); Burgeth, Gerald, 79805 Eggingen (DE); Bartmann, Kerstin, 79848 Bonndorf (DE)
(74) Vertreter: Gottschalk, Matthias

(57) **Zusammenfassung**

Lagerstabile Zusammensetzung zur Ausbildung von Beschichtungen an Bauwerken und dgl., umfassend wenigstens ein organisches Bindemittel, wenigstens einen Füllstoff und/oder Pigment, wenigstens ein Konservierungsmittel gegen mikrobiellen Befall, das wenigstens zwei verschiedene Wirkstoffe enthält, von denen einer ein chemisches Topfkonservierungsmittel (TKM) ist und von denen ein anderer ein partikulärer geträgerter Aktivstoff mit Gehalten an elementarem Silber und elementarem Ruthenium ist; Wasser zur Einstellung einer pastösen Konsistenz der Zusammensetzung sowie ggf. übliche Additive.

## Beschreibung

Die Erfindung betrifft lagerstabile Zusammensetzungen zur Ausbildung von Beschichtungen an Bauwerken und dgl., umfassend wenigstens ein organisches Bindemittel, wenigstens einen Füllstoff und/oder Pigment, Wasser zur Einstellung einer pastösen Konsistenz der Zusammensetzung, wenigstens ein Konservierungsmittel zur Verringerung oder Vermeidung des mikrobiellen Befalls sowie ggf. übliche Additive.

Solche Zusammensetzungen müssen zwischen ihrer Herstellung und ihrer Verwendung oft lange Lagerzeiten von Wochen oder Monaten überdauern, während derer sie lagerstabil sind und sich nicht relevant verändern.

Unter "Lagerstabilität" versteht man allgemein die Zeitspanne, während der eine Zusammensetzung wie die hier offenbarte ohne (relevante) Eigenschaftsveränderungen den ursprünglich eingestellten Zustand beibehält. Oft befindet sich die Zusammensetzung dabei in einem geschlossenen Behälter.

Das Material soll dabei ohne zusätzliche Maßnahmen, die über übliche Einwirkungen (Aufrühren u. dgl.) hinausgehen, verarbeitbar bleiben (vgl. z. B. "Fachlexikon Putz und Dekor" 4. Auflage 2019).

Wegen des Gehalts an organischen Bindemitteln in wässrigem Medium besteht die Gefahr, dass die Zusammensetzungen von Mikroben befallen werden, die sich von dem Bindemittel und anderen organischen Zusätzen ernähren. Das kann zur Unbrauchbarkeit der befallenen Zusammensetzung führen und muss daher wirksam verhindert werden. Die Zusammensetzung muss also auch in dieser Hinsicht ausreichend lagerstabil sein

Es ist daher bereits bekannt, solche Zusammensetzungen zu konservieren und gegen mikrobiellen Befall zu schützen.

Dazu dienen im Stand der Technik beispielsweise chemische Konservierungsmittel, die auch als Topfkonservierungsmittel ("TKM") bekannt sind. TKM sind - meist organische - mikrobiozide Verbindungen (Wirkstoffe), die dem zu konservierenden Material in geeigneten Mengen zugegeben werden.

Klassische chemische Topfkonservierungsmittel (TKM) werden üblicherweise in einem Konzentrationsbereich von 100 bis 1000 ppm (Gesamtmenge) eingesetzt, je nach Wirksamkeit des Wirkstoffs. Die Einsatzmenge der TKM in Beschichtungsstoffen wie Farben und Putzen beträgt in der Regel zwischen 50ppm und 500ppm (0,005 Gew.% bis 0,05 Gew.% bezogen auf den Einzelwirkstoff).

Meist werden Mischungen von verschiedenen Substanzen (Wirkstoffen) eingesetzt.

Die Verwendung dieser TKM ist -technisch gesehen- die beste und effizienteste Methode der Konservierung. TKM sind zuverlässig, leicht zu dosieren und weisen in einer entsprechenden Wirkstoffkombination auch entsprechend große Wirkungsbreite auf. Wirkungslücken können gut geschlossen werden.

Diese Topfkonservierungsmittel weisen zwei negative Eigenschaften auf: Zum einen emittieren einige von ihnen relevante Wirkstoffe in die Raumluft, zum anderen haben sie auch sensibilisierende Eigenschaften.

TKM sind grundsätzlich toxisch, daher u.U. gesundheits- und umweltgefährdend, teilweise sensibilisierend oder allergieauslösend, und werden daher immer stärker reglementiert (sowohl qualitativ als auch quantitativ). In der Wahrnehmung vieler Verbraucher ist die Verwendung solcher TKM daher unerwünscht. TKM sind zudem auch teuer.

Es wird erwartet, dass einerseits einige heute als TKM verwendete Wirksubstanzen in Zukunft verboten oder aus der Wirkstoffregistrierung gestrichen werden, und andererseits die Wirkstoff-Gehalte in den Beschichtungsmitteln weiter verringert werden müssen.

Jedoch nimmt bei niedrigeren Wirkstoffgehalten die Sicherheit der Konservierung rasch ab.

Es ist alternativ im Stand der Technik bereits vorgeschlagen worden, lagerstabile Zusammensetzungen der hier betrachteten Art ohne Gehalt an herkömmlichen Konservierungsstoffen zu schaffen, indem der pH-Wert der Zusammensetzung so erhöht wird, dass der mikrobielle Befall wirksam verhindert wird. Das ist aber nicht immer erfolgreich.

Zur Erhöhung des pH-Werts werden dabei Basen oder basische Puffersysteme eingesetzt: Laugen, Wasserglas / Kieselsol, Silikonate, Amine, etc. Der pH-Wert sollte langanhaltend zwischen 11 und 12 liegen, um eine konservierende Wirkung zu erzielen. Allerdings kommt es trotzdem relativ häufig zu Ausfällen, d.h. zu einem mikrobiellen Befall. Die Beschichtungsmassen "verderben" gegebenenfalls im Zeitraum zwischen Herstellung und Applikation, besonders häufig, wenn Gebinde angebrochen werden und dann wieder verschlossen und zwischengelagert werden. Die Wirksicherheit ist wesentlich geringer als bei der klassischen chemischen Konservierung.

Aufgrund des hohen pH-Werts ist zudem die Farbgestaltung solcher Beschichtungszusammensetzungen eingeschränkt. Manche (organischen) Farbpigmente können nicht eingesetzt werden, weil sie nicht basenstabil sind. Ähnliches gilt für Bindemittel und andere übliche Additive. Es kann nur eingesetzt werden, was ausreichend basenstabil ist. Ferner sind bei manchen Beschichtungszusammensetzungen aufgrund des hohen pH-Werts besondere Verarbeitungs- und Schutzmaßnamen zu treffen, oft besteht auch eine besondere Kennzeichnungspflicht wie "ätzend" oder "reizend".

Auf der Suche nach Alternativen zu herkömmlichen TKM ist weiterhin bereits vorgeschlagen worden, die mikrobioziden Eigenschaften bestimmter Edelmetalle und Metallverbindungen zu nutzen. Dabei stehen besonders Silber und Silberverbindungen im Vordergrund.

Jedoch erfordert die herkömmliche Konservierung mit Silber den Einsatz relativ hoher Konzentrationen an Edelmetall, um eine akzeptable Wirkung zu erzielen. Im Vergleich mit der nachstehend beschriebenen Erfindung liegt der Bedarf an Silber beispielsweise um Größenordnungen höher. Dabei ist die Wirksamkeit relativ gering, z. B. im Vergleich mit der schon genannten Konservierung durch Erhöhung des pH-Werts. In wirksamen Mengen bewirken Silberverbindungen zudem praktisch immer eine inakzeptable Graufärbung.

Neuerdings ist aus WO 2021/084140 A2 ein partikulärer geträgerter Aktivstoff mit Gehalten an elementarem Silber und elementarem Ruthenium bekannt, der als antimikrobielles Agens beispielsweise zu Putzen zugesetzt werden kann. Dafür sind Aktivstoff - Konzentrationen von etwa 1 Gew.% und mehr (bezogen auf das Gesamtgewicht der Zusammensetzung) erforderlich. Dadurch ist auch bei dieser Konservierung der Bedarf an Edelmetall noch hoch; es muss viel Agens eingesetzt werden, um eine gute Wirkung zu erzielen.

Spezieller handelt es sich bei dem Aktivstoff vorzugsweise um ein wasserunlösliches partikelförmiges Trägermaterial ausgewählt aus Glas, Nitriden, hochschmelzenden Oxiden, Silikaten, Kunststoffen, Polymeren natürlichen Ursprungs (auch modifiziert), Kohlenstoffsubstraten und Holz. Besonders bevorzugt wird Cellulosepulver.

Das Trägermaterial ist vorzugsweise mit Wasser quellfähig.

Der Aktivstoff umfasst weiterhin elementares Silber und elementares Ruthenium.

Der Gewichtsanteil von (Silber plus Ruthenium) im Aktivstoff liegt zwischen 0,1 und 50 Gew.%, bei einem Silber/Ruthenium - Gewichtsverhältnis im Bereich von 1 bis 2000 Gew.-Tln. Silber: 1 Gew.-Tl. Ruthenium.

Auch bei dieser Konservierung kommt es aufgrund der notwendig hohen Zudosierung des Aktivstoffs zu unerwünschten Verfärbungen.

Vor diesem Hintergrund besteht ein Bedarf an Beschichtungszusammensetzungen, die bei hoher Lagerstabilität zuverlässig verwendbar sind und die Nachteile der oben genannten Technologien nicht oder nur in verringertem Ausmaß aufweisen.

Insbesondere wird angestrebt., dass
- keine Grauverfärbungen oder Farbveränderungen der Zusammensetzung wie bei der bekannten Topfkonservierung mit Silber oder dem Aktivstoff gemäß WO 2021/084140 A2 auftreten;
- kein "Wirkversagen" wie bei Silber oder pH-Wert - Erhöhung eintritt;
- eine hohe und verlässliche biozide Wirksamkeit, vergleichbar den klassischen chemischen Konservierungsmitteln, langfristig gegeben ist;
- keine regulatorischen Einschränkungen bestehen,
- keine besondere Kennzeichnungspflicht besteht und
- keine Einschränkungen hinsichtlich Farbtongestaltung und Bindemittel- oder Additivstabilität bestehen.

Die Erfindung löst diese und andere Aufgaben durch die in den unabhängigen Patentansprüchen definierten Merkmalskombinationen. In den abhängigen Ansprüchen werden vorteilhafte Ausgestaltungen der Erfindung definiert.

Erfindungsgemäß umfasst die pastöse Beschichtungszusammensetzung ein Konservierungsmittel gegen mikrobiellen Befall, das wenigstens zwei antimikrobielle Wirkstoffe enthält.

Wenigstens einer dieser Wirkstoffe ist ein TKM wie eingangs definiert.

Klassische chemische Topfkonservierungsmittel (TKM) im Rahmen der vorliegenden Erfindung sind in der Verordnung (EU) Nr.528/2012 (Biozid-Verordnung) (Produktart 6) aufgeführten Biozide wie Phenole, insbesondere halogenierte Phenole, halogenhaltige Komponenten, halogenfreisetzende Komponenten, Isothiazolinone, aldehydhaltige Komponenten, aldehydfreisetzende Komponenten, Guanidine, Sulfone, Thiocyanate, Pyrithione, Antibiotika, quartäre vierfache Ammoniumsalze, Peroxide, Perchlorate, Amide, Amine, biozidische Enzyme, biozidische Polypeptide, Azole, Carbamate, Glyphosate, Sulfonamide. Silber und Ruthenium, soweit von der Verordnung umfasst, sind im Sinne dieser Anmeldung keine TKM.

Die erfindungsgemäß eingesetzten klassischen chemischen Topfkonservierungsmitteln (TKM) umfassen bevorzugt:
1,2-Benzisothiazol-3(2H)-one (BIT), CAS-Nr. 2634-33-5
2,2-Dibromo-2-cyanoacetamide (DBNPA), CAS-Nr. 10222-01-2
2-Methyl-2H-isothiazol-3-one (MIT), CAS-Nr. 2682-20-4
2-Octyl-2H-isothiazol-3-one (OIT), CAS-Nr. 26530-20-1
3-Iodo-2-propynylbutylcarbamate (IPBC), CAS-Nr. 55406-53-6
5-Chloro-2-methyl-2H-isothiazol-3-one (CIT), CAS-Nr. 26172-55-4 Bronopol, CAS-Nr.52-51-7
5-Chloro-2-methyl-2H-isothiazol-3-one (CMIT), CAS-Nr. 55965-84-9
Pyridine-2-thiol 1-oxide, sodium salt (Sodium pyrithione), CAS-Nr. 3811-73-2
Pyrithione zinc (Zinc pyrithione), CAS-Nr. 13463-41-7,
wobei auch mehrere dieser Wirkstoffe in Kombination eingesetzt werden können.

Vorzugsweise weisen die erfindungsgemäßen Beschichtungszusammensetzungen nur zwischen 0,00001 Gew.-% und 0,002 Gew.-% (0,1ppm - 20ppm) der herkömmlichen in der Verordnung (EU) Nr. 528/2012 (Biozid-Verordnung) (Produktart 6) aufgeführten Biozide auf, bevorzugter zwischen 0,00005 Gew.-% und 0,0015 Gew.-% (0,5ppm - 15ppm), besonders bevorzugt zwischen 0,0001 Gew.-% und 0,0005 Gew.-% (1ppm - 5ppm).

Der Gehalt an diesen bioziden Wirkstoffen kann je nach Wirkstoff insbesondere mittels LC-MS (Liquid-Chromatographie-Massenspektrometrie) gemäß DIN 38407-36:2014-09 und/oder DIN EN 12393-1:2014-01 und/oder §64 LFGB L 00.00-115 bestimmt werden. Der Formaldehydgehalt wird nach VdL-Richtlinie 03 bestimmt.

Als zweiten Wirkstoff enthält die erfindungsgemässe Beschichtung das Material einen Silber/Ruthenium - Aktivstoff gemäß WO2021/084140 A2.

Der Gehalt an diesem Aktivstoff liegt dabei regelmäßig unterhalb der aus WO2021/084140 A2 bekannten Konzentrationen.

Dieser Gehalt an diesem Aktivstoff liegt breit bei 0,001 bis 0,5 Gew.%., bevorzugt bei 0,001 - 0,1 Gew.%, noch mehr bevorzugt bei 0,002 - 0,05 Gew%, bezogen auf die Gesamtmenge der Beschichtung.

Vorzugsweise sind die Gehalte an TKM und Aktivstoff in der Beschichtungszusammensetzung daher sehr viel niedriger als im Stand der Technik.

Besonders bevorzugt liegt der TKM-Gehalt unterhalb des per se mikrobiozid voll wirksamen Gehaltes des TKM. Der Gehalt an Aktivstoff liegt unterhalb des perse mikrobizid voll wirksamen Gehalt. Die mikrobiozide Wirkung ergibt sich dann durch das Zusammenwirken von TKM und Aktivstoff.

Wenigstens bei einigen dieser Kombinationen von TKM und Aktivstoff wird daher anscheinend ein Synergismus beobachtet. Der wirksame Gesamtgehalt an (TKM plus Aktivstoff) ist dann niedriger als der Wirkstoffgehalt, der sich bei Ersatz einer Teilmenge TKM durch eine äquivalente Teilmenge an Aktivstoff ergeben würde. Die Wirksamkeit der Kombination ist deutlich grösser als die Summe der Wirksamkeiten der Teilmengen.

Als Bindemittel für die erfindungsgemässen Beschichtungszusammensetzungen eignen sich die organischen Bindemittel wie z. B. in EP 3 460 008 beschrieben.

Das organische Bindemittel ist in bevorzugten Ausführungsformen der Erfindung ausgewählt aus der Gruppe, die Homopolymere, Copolymere oder Terpolymere von Acrylsäure und/oder Methacrylsäure, Itaconsäure sowie Säurestern wie Ethylacrylat, Butylacrylat; Styrol, substituiertes oder unsubstituiertes Vinylchlorid, Vinylacetat, Acrylamide und Acrylonitril; wasserverdünnbare Alkydpolymere, Kombinationen von (Meth)Acryl/Alkyd-polymeren, Polyvinylalkohol und deren Mischungen umfasst, wobei Homopolymere oder Copolymere von Acrylsäure und/oder Methacrylsäure bevorzugt sind.

Der Gehalt liegt vorzugsweise breit bei 1 - 40 Gew.%, bevorzugter bei 2 - 30 Gew.% und besonders bevorzugt bei 2,5 - 25 Gew.%, bezogen auf das Gesamtgewicht der Zusammensetzung.

In bevorzugten Ausführungsformen der Erfindung ist der wenigstens eine Füllstoff bzw. das wenigstens eine Pigment ausgewählt aus der Gruppe, die pyrogen gefällte Kieselsäure, gefällte Kieselsäure, Silizium-Aluminium-Mischoxide, Erdalkalicarbonate wie Calciumcarbonat, Siliziumdioxid, Silikate, z.B. Aluminosilikate, Sulfate, z.B. Bariumsulfate, Titandioxid, Buntpigmente, z.B. Eisenoxide, Bismutvanadate oder Mischungen hiervon umfasst, wobei Titandioxid, Silikate und Carbonate besonders bevorzugt sind.

Der Gehalt an Pigmenten und/oder Füllstoffen liegt vorzugsweise breit bei 1 - 90 Gew.% bvzgt. bei 10 - 85 Gew%, bvzgter bei 15 - 80 Gew%. bezogen auf das Gesamtgewicht der Zusammensetzung.

In bevorzugten Ausführungsformen der Erfindung haben die Zusammensetzungen einen Gehalt an wenigstens einem Additiv wie beispielsweise einem Rheologie-Additiv, einem Entschäumer, einem Hydrophobierungsmittel, Fasern, einem Filmbildehilfsmittel und einem Dispergiermittel.

Der Wassergehalt liegt meist bei 5 - 50 Gew.%, bezogen auf Gesamtgewicht der Zusammensetzung.

Vorzugsweise weisen die erfindungsgemäßen Beschichtungsstoffe keine Amin- oder Ammoniumverbindungen in Konzentrationen über 0,01 Gew.-% (100ppm) auf. Solche Amin- oder Ammoniumverbindungen werden beispielsweise als Stabilisatoren in Wasserglas-enthaltenden Beschichtungszusammensetzungen eingesetzt.

Ferner haben die erfindungsgemäßen Beschichtungszusammensetzungen vorzugsweise einen pH-Wert unter 10, bevorzugter unter 9.

Wesentliche Vorteile der Erfindung ergeben sich aus der vorstehenden Beschreibung.

Die Erfindung vermeidet die oben genannten Nachteile der alternativen Konservierungstechnologien.

Weitere Vorteile der erfindungsgemäßen Beschichtungsmassen sind ein verringertes allergenes Potential und dass keine Emission von Bioziden in die Raumluft stattfindet.

### Allgemeine Formulierung einer erfindungsgemäßen Beschichtungszusammensetzung:

1 - 40 Gew.% organisches und/oder anorganisches Bindemittel, bvzgt. 2 - 30 Gew%, bvzgter 2,5 - 25 Gew%
1 - 90 Gew.% Füllstoffe / Pigmente, bvzgt. 10 - 85 Gew%, bvzgter 15 - 80 Gew%
0,00001 - 0,002 Gew.% Topfkonservierungsmittel nach EU Nr. 528/2012 (Produktart 6), bvzgt. 0,00005 - 0,0015 Gew.%, bvzgter 0,0001 - 0,0005 Gew.%
0,001 - 0,5 Gew.% Ag/Ru - Aktivstoff, bvzgt. 0,001 - 0,1 Gew.%, bvzgter 0,002 - 0,05 Gew.%
0,1 - 10 Gew.% weitere Additive wie beschrieben , bvzgt. 0,2 - 8 Gew%, bvzgter 0,5 - 6 Gew%
5 - 50 Gew.% Wasser

### Erfindungsgemäße Dispersionsfarbe Innenbereich

Wässrige Polymerdispersion (ca. 50 % Feststoffgehalt) : 44 Gew.%
Füllstoffe und Pigmente: 43 Gew.%
Topfkonservierungsmittel MIT / BIT / CIT : 0,0002 Gew.%
Ag/Ru -Aktivstoff: 0,04 Gew.%
Additive (insb. Rheologie-Additive, Hydrophobierungsmittel, Entschäumer, Filmbildehilfsmittel, Fasern, Dispergiermittel, etc.): 5 Gew.-%
Wasser auf 100 Gew.%

### Referenzbeispiel 1: Dispersionsfarbe Innenbereich ohne TKM

Wässrige Polymerdispersion (ca. 50 % Feststoffgehalt): 44 Gew.%
Füllstoffe und Pigmente: 43 Gew.%
Ag/Ru - Aktivstoff: 0,04 Gew.%
Additive (insb. Rheologie-Additive, Hydrophobierungsmittel, Entschäumer, Filmbildehilfsmittel, Fasern, Dispergiermittel, etc.): 5 Gew.-%
Wasser auf 100 Gew.%

### Referenzbeispiel 2: Dispersionsfarbe Innenbereich ohne Ag/Ru-Aktivstoff

Wässrige Polymerdispersion (ca. 50 % Feststoffgehalt): 44 Gew.%
Füllstoffe und Pigmente: 43 Gew.%
Topfkonservierungsmittel MIT / BIT / CIT: 0,0002 Gew.%
Additive (insb. Rheologie-Additive, Hydrophobierungsmittel, Entschäumer, Filmbildehilfsmittel, Fasern, Dispergiermittel, etc.): 5 Gew.-%
Wasser auf 100 Gew.%

### Referenzbeispiel 3: Dispersionsfarbe Innenbereich mit Standard-Topfkonservierung (ohne Ag/Ru-Aktivstoff)

Wässrige Polymerdispersion (ca. 50 % Feststoffgehalt): 44 Gew.%
Füllstoffe und Pigmente: 43 Gew.%
Topfkonservierungsmittel MIT / BIT / CIT: 0,05 Gew.%
Additive (insb. Rheologie-Additive, Hydrophobierungsmittel, Entschäumer, Filmbildehilfsmittel, Fasern, Dispergiermittel, etc.): 5 Gew.-%
Wasser auf 100 Gew.%

### Referenzbeispiel 4: Dispersionsfarbe Innenbereich mit hohem Ag/Ru-Aktivstoff - Gehalt (ohne TKM)

Wässrige Polymerdispersion (ca. 50 % Feststoffgehalt): 44 Gew.%
Füllstoffe und Pigmente: 43 Gew.%
Ag/Ru - Aktivstoff: 1,0 Gew.%
Additive (insb. Rheologie-Additive, Hydrophobierungsmittel, Entschäumer, Filmbildehilfsmittel, Fasern, Dispergiermittel, etc.): 5 Gew.-%
Wasser auf 100 Gew.%

Alle Prozentangaben sind bezogen auf das Gesamtgewicht der Zusammensetzung.

### Der pH-Wert dieser Farbansätze lag bei ca. 8,5.

Der in den obigen Beispielen und Vergleichsbeispielen verwendete Aktivstoff entsprach dem Ausführungsbeispiel 1 der WO 2021/ 084140 A2.

Die Lagerstabilität hinsichtlich des mikrobiellen Befalls wird im Prinzip folgendermaßen getestet. Die Testmethode ist in DE 10 20 181 280 90 Aloffenbart:
Zum Zeitpunkt t0 werden von jedem Muster 0.1 ml zur Bakterienquantifizierung entnommen und anschließend mit jeweils 0.1 ml Inokulum beimpft und je nach Viskosität geschüttelt oder gerührt. Dann wird bei Raumtemperatur (ca. 22°C) unter Lichtausschluss inkubiert. Zu den Zeitpunkten t1 bis t10 (jeweils 1 Woche zwischen den Zeitpunkten) werden jeweils 0.1 ml Probe zur Bakterienquantifizierung entnommen und anschließend der Ansatz mit je 0.1 ml Inokulum neu beimpft und bei Raumtemperatur (ca. 22°C) weiter inkubiert.

Die entnommenen Proben (0.1ml) werden 1:10 in phosphatgepufferter Salzlösung (PBS) verdünnt, davon 0.1 ml auf TS-Agarplatten ausplattiert und die Platten bei 30°C für 48-72h inkubiert. Der TVC wird als Kolonien bildende Einheiten pro Milliliter dokumentiert (cfu/ml), das Detektionslimit liegt bei 100 cfu/ml. Die Platten werden bis zu einer Konzentration von 20'000 cfu/ml (=200 cfu/Platte) genau ausgezählt, während höhere Konzentrationen mittels eines Ratingsystem abgeschätzt werden. Des Weiteren wird der pH-Wert zu den Zeitpunkten t0 und t10 gemessen.

Als Inokulum dient eine Mischkultur aus 7 Bakterienstämmen (Pseudomonas aeruginosa, Pseudomonas putida, Pseudomonas pseudoalcaligenes, Burkholderia cepacia, Escherichia coli, Alcaligenes faecalis und Staphylococcus aureus) und 3 Hefestämmen (Saccharomyces cerevisiae, Pichia membranifaciens und Rhodotorula mucilaginosa) Die einzelnen Ansätze werden mit einer definierten Keimlösung in bestimmten Zeitabständen regelmäßig beimpft (in der Regel zehn Mal). Nach den Beimpfungen und einer gewissen Inkubationszeit werden die Ansätze auf ihre Keimlast untersucht. Wenn sich die Keime nach einer Beimpfung massenhaft vermehren, ist man an die Belastungsgrenze der Topfkonservierungsmethode gelangt. Je später dies geschieht, also je mehr Beimpfungen erforderlich sind, umso besser ist die Konservierung.

**Ergebnisse:**

| | Anzahl der Beimpfungen bis Befall |
|---|---|
| Erfindungsgemäße Dispersionsfarbe | 9 |
| Referenzbeispiel 1 | 2 |
| Referenzbeispiel 2 | 1 |
| Referenzbeispiel 3 | 10 |
| Referenzbeispiel 4 | 5 |

Das Referenzbeispiel 4 weist starke inakzeptable grau-braune Verfärbung auf. Der Delta E^{∗} Wert gegenüber den Ag/Ru-Aktivstoff-freien Ansätzen beträgt mehr als 5. Akzeptabel wäre nur ein Wert unterhalb 1.

Das Referenzbeispiel 3 ist etwa so gut konserviert wie das erfindungsgemässe Beispiel, benötigt dafür jedoch einen sehr viel höheren Gehalt an TKM.

## Patentansprüche

1. Lagerstabile Zusammensetzung zur Ausbildung von Beschichtungen an Bauwerksoberflächen und dgl.,
umfassend
a) wenigstens ein organisches Bindemittel,
b) wenigstens einen Füllstoff und/oder Pigment,
c) wenigstens ein Konservierungsmittel gegen mikrobiellen Befall, das wenigstens zwei verschiedene Wirkstoffe enthält., von denen einer ein chemisches Topfkonservierungsmittel (TKM) ist und von denen ein anderer ein partikulärer geträgerter Aktivstoff mit Gehalten an elementarem Silber und elementarem Ruthenium ist;
d) Wasser zur Einstellung einer pastösen Konsistenz der Zusammensetzung
e) sowie ggf. übliche Additive.

2. Zusammensetzung nach Anspruch 1, bei der das TKM wenigstens ein in der Verordnung (EU) Nr.528/2012 (Biozid-Verordnung) (Produktart 6) aufgeführtes Biozid, insbesondere ein Phenol, speziell halogeniertes Phenol, eine halogenhaltige Komponente, eine halogenfreisetzende Komponente, ein Isothiazolinon, eine aldehydhaltige Komponente, eine aldehydfreisetzende Komponente, ein Guanidin, ein Sulfon, ein Thiocyanat, ein Pyrithion, ein Antibiotikum, ein quartäres vierfaches Ammoniumsalz, ein Peroxid, ein Perchlorat, ein Amid, ein Amin, ein biozidisches Enzym, ein biozidisches Polypeptid, ein Azol, ein Carbamat, ein Glyphosat, oder ein Sulfonamid umfasst, wobei Schwermetalle, soweit von der Verordnung umfasst, im Sinne dieser Anmeldung keine TKM sind.

3. Zusammensetzung nach Anspruch 1 oder 2, bei der das TKM
1,2-Benzisothiazol-3(2H)-one (BIT), CAS-Nr. 10222-01-2
2-Methyl-2H-isothiazol-3-one (MIT), CAS-Nr. 2682-20-4
2-Octyl-2H-isothiazol-3-one (OIT), CAS-Nr. 26530-20-1
3-Iodo-2-propynylbutylcarbamate (IPBC), CAS-Nr. 55406-53-6
5-Chloro-2-methyl-2H-isothiazol-3-one (CIT), CAS-Nr. 26172-55-4
Bronopol, CAS-Nr.52-51-7
5-Chloro-2-methyl-2H-isothiazol-3-one (CMIT), CAS-Nr. 55965-84-9
Pyridine-2-thiol 1-oxide, sodium salt (Sodium pyrithione), CAS-Nr. 3811-73-2
oder Pyrithione zinc (Zinc pyrithione), CAS-Nr. 13463-41-7, umfasst.

4. Zusammensetzung gemäß einem der Ansprüche 1 bis 3, die zwischen 0,00001 Gew.-% und 0,002 Gew.-% (0,1ppm - 20ppm) bevorzugter zwischen 0,00005 Gew.-% und 0,0015 Gew.-% (0,5ppm - 15ppm), besonders bevorzugt zwischen 0,0001 Gew.-% und 0,0005 Gew.-% (1ppm - 5ppm) der in der Verordnung (EU) Nr. 528/2012 (Biozid-Verordnung) (Produktart 6) aufgeführten Biozide (mit Ausnahme von Silber und Ruthenium) aufweist.

5. Zusammensetzung gemäß einem der vorstehenden Ansprüche, bei der der Aktivstoff wenigstens einem der in WO 2021/084140 A2 offenbarten, mit elementarem Silber und elementarem Ruthenium ausgestatteten Trägermaterialien entspricht.

6. Zusammensetzung gemäß einem der vorstehenden Ansprüche, mit einem Gehalt an Aktivstoff von 0,001 bis 0,5 Gew.%., bevorzugt von 0,001 - 0,1 Gew.%, noch mehr bevorzugt von 0,002 - 0,05 Gew%, bezogen auf das Gesamtgewicht der Zusammensetzung.

7. Zusammensetzung gemäß einem der vorstehenden Ansprüche, bei welcher der TKM-Gehalt unterhalb des per se mikrobiozid voll wirksamen Gehaltes des TKM und/oder der Gehalt an Aktivstoff liegt unterhalb des per se mikrobizid voll wirksamen Gehalts des ktivstoffs liegt und vorzugsweise der wirksame Gesamtgehalt an (TKM plus Aktivstoff) niedriger ist als der Wirkstoffgehalt, der sich bei gleicher Wirksamkeit bei Ersatz einer Teilmenge TKM durch eine äquivalente Teilmenge an Aktivstoff ergeben würde.

8. Zusammensetzung gemäß einem der vorstehenden Ansprüche, bei dem der Aktivstoff wasserunlösliches partikelförmiges Trägermaterial ausgewählt aus Glas, Nitriden, hochschmelzenden Oxiden, Silikaten, Kunststoffen, Polymeren natürlichen Ursprungs (auch modifiziert), Kohlenstoffsubstraten und Holz, insbesondere Cellulosepulver umfasst.

9. Zusammensetzung nach einem der vorstehenden Ansprüche, wobei der Gewichtsanteil von (Silber plus Ruthenium) im Aktivstoff zwischen 0,1 und 50 Gew.%, bei einem Silber/Ruthenium - Gewichtsverhältnis im Bereich von 1 bis 2000 Gew.-Tln. Silber: 1 Gew.-T1. Ruthenium liegt.

10. Zusammensetzung nach einem der vorstehenden Ansprüche, **gekennzeichnet durch** einen Gehalt an wenigstens einem Additiv wie beispielsweise einem Rheologie-Additiv, einem Entschäumer, einem Hydrophobierungsmittel, Fasern, einem Filmbildehilfsmittel und einem Dispergiermittel.

11. Zusammensetzung nach einem der vorstehenden Ansprüche, **dadurch gekennzeichnet, dass** die Zusammensetzung ein Putz, eine Farbe, insbesondere eine Dispersionsfarbe, eine dekorative Endbeschichtung oder dgl. ist.
